# EUROPÄISCHE PATENTSCHRIFT

(11) **EP 3 956 420 B1**
(45) Veröffentlichungstag und Bekanntmachung des Hinweises auf die Patenterteilung: **26.07.2023**
(21) Anmeldenummer: 20717697.5
(22) Anmeldetag: 16.04.2020
(51) Int. Cl.: C10B 53/02, C10J 3/50, C10J 3/66, C10J 3/72

(54) **VERFAHREN ZUR HERSTELLUNG VON HOLZKOHLE**
METHOD FOR THE PREPARATION OF CHARCOAL
PROCÉDÉ DE FABRICATION DE CHARBON DE BOIS

(30) Priorität: 16.04.2019 EP 19169648
(43) Veröffentlichungstag der Anmeldung: 23.02.2022
(73) Patentinhaber: SIOTUU GmbH, 6500 Fließ (AT)
(72) Erfinder: HUPFAUF, Benjamin, 6521 Fließ (AT)
(74) Vertreter: Schwarz & Partner Patentanwälte GmbH
(86) Internationale Anmeldenummer: PCT/EP2020/060715
(87) Internationale Veröffentlichungsnummer: WO 2020/212495

(56) Entgegenhaltungen:
- EP-A2- 2 479 244
- WO-A2-2011/134961
- CN-A- 109 370 692
- DE-A1- 19 608 093
- DE-C1- 10 142 825
- US-A1- 2010 095 592
- US-A1- 2015 013 575

## Beschreibung

Die Erfindung betrifft ein Verfahren zur Herstellung von Holzkohle sowie nach diesem Verfahren erhältliche Holzkohle.

### HINTERGRUND DER ERFINDUNG

Holzkohle wird durch Erhitzen von Holz durch pyrolytische Zersetzung und im Wesentlichen unter Luftausschluss hergestellt. Bei bekannten Verfahren nach Stand der Technik wird das Holz zunächst aufgeheizt und getrocknet, anschließend bei höheren Temperaturen der pyrolytischen Zersetzung unterworfen, sodass gasförmige und flüssige Bestandteile des Holzes vergasen und am Ende des Pyrolyseprozesses Holzkohle als Rückstand zurückbleibt.

Abhängig von der Qualität der eingesetzten Biomasse variiert der Kohlenstoffgehalt in der fertigen Holzkohle. Für besonders hochwertige Holzkohle mit hohem Kohlenstoffgehalt müssen derzeit teilweise langsam wachsende Tropenhölzer eingesetzt werden. Einen hohen Kohlenstoffgehalt erzielt man nur bei der Verkohlung von reinem Holz, wobei mit energieaufwändigen Verkohlungsverfahren in der fertigen Holzkohle ein Kohlenstoffgehalt von bis zu 80 Gew.% erzielbar ist. Ist bei der Verkohlung auch Rinde oder Borke vorhanden, sinkt der Kohlenstoffgehalt in der fertigen Holzkohle signifikant ab.

Holzkohle, die nach bekannten Verfahren hergestellt wird, weist außerdem unterschiedlich große Stücke mit einem Durchmesser von mm-Bruchteilen bis hin zu mehreren Zentimetern auf. Für zahlreiche Anwendungsgebiete ist eine solche Größenverteilung ungeeignet. Etliche Anwendungsgebiete erfordern kleine Teilchen mit homogener Größenverteilung.

Verfahren mit mehrstufigen Vergasungsprozessen zur Erzeugung von thermischer Energie aus Biomasse sind beispielsweise in EP 2 479 244 A2 und US 2010/095592 A1 offenbart. In diesen Dokumenten wird Biomasse in einem dreistufigen Vergasungsprozess, welcher eine Pyrolyseeinheit, eine Oxidationseinheit und eine Reduktionseinheit umfasst, in brennbares Gas übergeführt. Als Nebenprodukt kann dabei Koks bzw. Asche aus dem Prozess entnommen werden. Das so entnommene Koks weist jedoch hinsichtlich Schadstofffreiheit, Partikelgröße und auch Kohlenstoffgehalt wesentliche Nachteile auf.

### KURZBESCHREIBUNG DER ERFINDUNG

Aufgabe der vorliegenden Erfindung ist daher die Bereitstellung eines Verfahrens zur Herstellung von Holzkohle mit einem sehr hohen Kohlenstoffgehalt und einem sehr niedrigen Schadstoffgehalt, bei dem minderwertige Biomasse eingesetzt werden kann. Außerdem soll die fertige Holzkohle eine homogene Größenverteilung im sub-mm Bereich aufweisen.

Gelöst wird diese Aufgabe durch ein Verfahren zur Herstellung von Holzkohle umfassend die Schritte:
a) Zuführen von Biomasse, insbesondere Waldhackgut, in eine Pyrolyseeinheit, in welcher das Waldhackgut zu einem festes, flüssiges und gasförmiges Material aufweisenden Vollstrom pyrolysiert wird,
b) Zuführen des Vollstroms und eines Vergasungsmittels in eine Oxidationseinheit, wobei der Vollstrom zumindest partiell oxidiert und pneumatisch transportiert wird,
c) Zuführen des partiell oxidierten Vollstroms aus der Oxidationseinheit in eine im Wesentlichen senkrecht angeordneten Reduktionseinheit, wobei der Materialausgang der Oxidationseinheit mit der Reduktionseinheit verbunden ist, wobei sich der Querschnitt der Reduktionseinheit mit zunehmender Distanz vom Materialausgang der Oxidationseinheit vergrößert, die Strömungsgeschwindigkeit des Vollstroms in der Reduktionseinheit an das Material des Vollstroms und an die Form des Strömungsquerschnitts der Reduktionseinheit so angepasst ist, dass sich ein stabiles in Schwebe gehaltenes Festbett in der Reduktionseinheit ausbildet,
d) Entnehmen der rohen Holzkohle aus der Reduktionseinheit über einen Überlauf, und
e) Abtrennen von gasförmigen Bestandteilen in einem Heißgasfilter und Sammeln der Holzkohle,
f) Ablöschen der gesammelten Holzkohle mit Wasser, wobei die Holzkohle
   - einen Trockenmasseanteil von 68 bis 95 %, vorzugsweise von 75 bis 93 % und besonders bevorzugt von 80 bis 92 % an Kohlenstoff,
   - einen Trockenmasseanteil von 4 bis 18 %, vorzugsweise von 5 bis 13 % und besonders bevorzugt von 6 bis 10 % an Asche,
   - einen Masseanteil von 5 bis 50 %, vorzugsweise von 10 bis 40 % und besonders bevorzugt von 15 bis 35 % an Wasser,
   - und vorzugsweise eine innere Oberfläche von 200 bis 400 m²/g aufweist.

Dabei wird in Schritt c) aus dem Koks des partiell oxidierten Vollstroms ein stabiles Schwebefestbett gebildet. Das heißt die Koksschüttung "schwebt" in der Reduktionseinheit auf dem Pyrolysegasstrom, da die Gewichtskräfte der Festbett-Schüttung nahezu im Gleichgewicht mit den Kräften des aufsteigenden Pyrolysegasstroms stehen. Dadurch kommt es nur zu geringen Druckverlusten in der Koksschüttung und zu einem effizienten Umsatz von Schadstoffen, auch aufgrund der hohen Verweilzeit des Pyrolysegases.

Mit einem solchen Verfahren lässt sich Holzkohle herstellen, wobei die mittlere Partikelgröße d₅₀ 30 bis 300 µm, vorzugsweise 40 bis 250 µm und besonders bevorzugt 50 bis 100 µm beträgt.

Es hat sich überraschenderweise herausgestellt, dass mit diesem Verfahren Waldhackgut, bei dem es sich um den minderwertigsten Abfall in der holzgewinnenden Industrie handelt, zu hochwertiger Holzkohle mit homogener Partikelgröße verarbeitet werden kann.

In einer bevorzugten Ausführungsvariante werden die gasförmigen Bestandteile im Heißgasfilter mithilfe von porösen Keramiken bei einer Temperatur von 250 bis 600 °C abgetrennt. Durch die Verwendung des Heißgasfilters wird verhindert, dass die im thermochemischen Prozess entstandenen Schadstoffe wie beispielsweise Polyzyklische Aromatische Kohlenwasserstoffe (PAK) an der Holzkohle kondensieren. Die so produzierte reine Holzkohle genügt aufgrund der Schadstoffreinheit demnach unterschiedlichen Zertifikaten und Verordnungen.

In einer weiteren Ausführungsvariante kann die Holzkohle einen Masseanteil von 20 bis 50 %, vorzugsweise von 25 bis 40 % und besonders bevorzugt von 28 bis 35 % an Wasser aufweisen.

Des Weiteren kann die Holzkohle eine innere Oberfläche von 200 bis 400 m²/g aufweisen.

Die so hergestellte Holzkohle kann in verschiedenen Verfahren weiterverarbeitet werden.

In einem Aspekt der Erfindung ist daher ein Verfahren zur Herstellung von Grill-Holzkohle-Briketts vorgesehen, welches, dadurch gekennzeichnet ist, dass Holzkohle nach einem Verfahren nach Anspruch 1 bereitgestellt wird, umfassend die nachfolgenden Schritte:
- Beschickung der Holzkohle in die Brikettier-Linie, wobei in der Beschickungsanlage eine Homogenisierung der Holzkohle erfolgt,
- Vermengung der homogenisierten Holzkohle mit Bindemitteln und vorzugsweise Additiven im Misch-Apparat,
- Vorverdichtung der Holzkohle/Bindemittel/Additiv-Mischung mithilfe von Walzen für 1 bis 30 Minuten, vorzugsweise für 2 bis 20 Minuten und besonders bevorzugt für 3 bis 10 Minuten im Vorverdichter,
- Brikettierung der vorverdichteten Holzkohle/Bindemittel/Additiv-Mischung in der hydraulischen Rollen-Brikettier-Anlage, wobei die Mischung über zumindest zwei Walzen mit formgebenden Mulden bei einem Anpressdruck von 1 bis 12 bar, vorzugsweise von 1,5 bis 9 bar und besonders bevorzugt von 2 bis 7 bar geleitet wird,
- Trocknung der Holzkohle-Briketts bei einer Trocknungstemperatur von 50 bis 140 °C, vorzugsweise von 65 bis 110 °C und besonders bevorzugt von 75 bis 105 °C in einem Konvektionstrockner,
- Verpackung der trockenen Holzkohle-Briketts in einer Abfüllanlage.

Die benötigte Zeit für die Vorverdichtung lässt sich dabei durch mehr Leistung, das heißt durch ein Erhöhen der Drehzahl der Walzen, kompensieren. Außerdem lässt sich die Trocknungstemperatur mit einer höheren Gebläseleistung minimieren.

Die Bindemittel können aus der Gruppe der vorzugsweise recycelten pflanzlichen Öle bzw. Fette, Stärken wie beispielsweise Roggen oder Mais, Zuckerlösungen wie Rüben- oder Zuckerrohrmelasse und Cellulose-Verbindungen sein und einen Masseanteil von 0,5 bis 20 %, vorzugsweise von 1 bis 15 % und besonders bevorzugt von 2 bis 10 % an der Trockenmasse der Holzkohle-Briketts haben.

Die Additive können aus der Gruppe der Kalzium-Verbindungen, Ton-Erden, Gummi-Arabicum und Tonmineralien gewählt werden und einen Masseanteil von 0 bis 10 %, vorzugsweise 0,5 bis 8 % und besonders bevorzugt 1 bis 5 % an der Trockenmasse der Holzkohle-Briketts haben.

Prinzipiell werden Additive optional beigemengt, um spezifische Eigenschaften der Grill-Holzkohle, wie beispielweise Anzündverhalten und Festigkeit, zu verbessern.

In einem Aspekt betrifft die Erfindung ein Verfahren zur Herstellung von Aktiv-Holzkohle, dadurch gekennzeichnet, dass Holzkohle nach einem Verfahren nach Anspruch 1 bereitgestellt wird, umfassend die nachfolgenden Schritte,
- Beschickung der Holzkohle in die Aktivierungs-Einheit, wobei in der Beschickungsanlage eine Homogenisierung der Holzkohle vorgenommen wird,
- Aktivierung der homogenisierten Holzkohle in der Aktivierungs-Einheit mit einem Aktivierungsmittel, vorzugsweise Wasserdampf oder Kohlendioxid, bei einer Temperatur von 600 bis 1100 °C, vorzugsweise 700 bis 1000 °C und besonders bevorzugt 800 bis 950 °C für 5 bis 180 Minuten, vorzugsweise 10 bis 120 Minuten und besonders bevorzugt 15 bis 90 Minuten, wobei der Umsatz des Aktivierungsmittels pro 1 g Holzkohle mit 0,1 bis 2 g, vorzugsweise 0,3 bis 1,8 g und besonders bevorzugt 0,4 bis 1,6 g gewählt wird,
- Konfektionierung der aktivierten Holzkohle,
- Verpackung der konfektionierten aktivierten Holzkohle in der Abfüllanlage.

Die erfindungsgemäße Holzkohle bietet gegenüber der üblicherweise zur Aktivierung verwendeten fossilen Kohle den Vorteil, dass sie schon vor der Aktivierung eine innere Oberfläche von ca. 200 - 400 m²/g hat. Im Gegensatz dazu besitzt die fossile Kohle keine nennenswerte innere Oberfläche.

Nach der Aktivierung besitzt die Holzkohle vorzugsweise eine innere Oberfläche von ca. 1000 m²/g.

Der zweite wesentliche Parameter von aktivierter Kohle ist die Porengröße, wobei zwischen Mikro-, Meso-, und Makroporen unterschieden wird. Die erfindungsgemäße Aktiv-Holzkohle kann spezifisch auf ihren Anwendungsfall in ihrer Porenstruktur eingestellt werden. So können Aktiv-Holzkohlen mit einer vorzugsweise Mikro- oder vorzugsweise Meso- oder vorzugsweise Makrostruktur hergestellt werden.

Die Aktiv-Holzkohle wird in der Konfektionierung bevorzugt in anderen Formen wie Granulate bzw. Pellets gebracht, wobei sie beispielsweise auch als Pulver-Aktiv-Holzkohle eingesetzt werden kann.

In einem weiteren Aspekt betrifft die Erfindung ein Verfahren zur Herstellung von Industrie-Holzkohle, insbesondere einen Zuschlagstoff für Beton oder einen Sekundärrohstoff für die metallverarbeitende Industrie, dadurch gekennzeichnet, dass Holzkohle nach einem Verfahren nach Anspruch 1 bereitgestellt wird, umfassend die nachfolgenden Schritte:
- Beschickung der Holzkohle in die Aufbereitungs-Einheit,
- Aufteilung der Holzkohle in der Klassier-Einheit, wobei je nach Partikelgröße in eine Grob-, Mittel- und Feinfraktion aufgeteilt wird, wobei die Grobfraktion eine Partikelgröße von 0,4 bis 10 mm, vorzugsweise 0,3 bis 6 mm und besonders bevorzugt 0,25 bis 4 mm umfasst, wobei die Mittelfraktion eine Partikelgröße von 100 bis 400 µm, vorzugsweise 75 bis 300 µm und besonders bevorzugt 50 bis 250 µm umfasst, wobei die Feinfraktion eine Partikelgröße von 0 bis 100 µm, vorzugsweise 0 bis 75 µm und besonders bevorzugt 0 bis 50 µm umfasst,
- Verarbeitung der aufgeteilten Holzkohle je nach Fraktion zu einem Kompakt oder zu feinerem Material in der Kompaktierungs- bzw. Mahl- Einheit, wobei nach dem Mahlprozess die feinere Holzkohle erneut in die Klassier-Einheit geleitet und aufgeteilt wird,
- Konfektionierung der kompaktierten Industrie-Holzkohle,
- Verpackung der konfektionierten Industrie-Holzkohle in der Abfüllanlage.

Aus der Holzkohle können in der Konfektionierung Kompakte und Agglomerate wie zum Beispiel Briketts, Pellets und Granulate hergestellt werden.

Die Holzkohle kann in der Konfektionierung mit vorzugsweise mineralischen Stoffen wie zum Beispiel Kalium-, Natrium-, und Kalziumsalze imprägniert werden.

In der Abfüllanlage können Verpackungen aus der Gruppe der Kraft-Papiere, Kartons, Stoffsäcke und Kunststoffverpackungen gewählt werden.

Ein Aspekt der Erfindung betrifft ein Verfahren zur Herstellung eines Dämmstoffs, wobei Holzkohle nach einem zuvor genannten Verfahren hergestellt wird und mit einem Dämmaterialrohstoff vermischt wird. Anschließend wird dieses Gemisch zum Dämmstoff verarbeitet. Typische Dämmaterialrohstoffe sind Kunststoffe wie Polystyrol, Polyurethan, Resopal, oder andere aus der Dämmindustrie bekannte Materialien wie z.B. Holzwolle. Diese werden wie bekannt verarbeitet (z.B. geschäumt), wobei vor der endgültigen Verarbeitung die Holzkohle zugesetzt wird.

Ein solches Vorgehen führt zu leichteren Dämmstoffen und unter Umständen auch zu einer verbesserten mechanischen Stabilität und kann erhöhte Brandschutzeigenschaften aufweisen.

### AUSFÜHRLICHE BESCHREIBUNG DER ERFINDUNG

Weitere Vorteile und Details der Erfindung werden nachfolgend mit den Figuren und Figurenbeschreibungen erläutert.

Es zeigt:
- Fig. 1: schematisch die Einzelschritte des Herstellungsverfahrens für Holzkohle.
- Fig. 2: schematisch die Verarbeitung zu Grill-Holzkohle-Briketts.
- Fig. 3: schematisch die Herstellung von Aktivkohle.
- Fig. 4: schematisch die Herstellung von Industrie-Holzkohle als Zuschlagstoff.

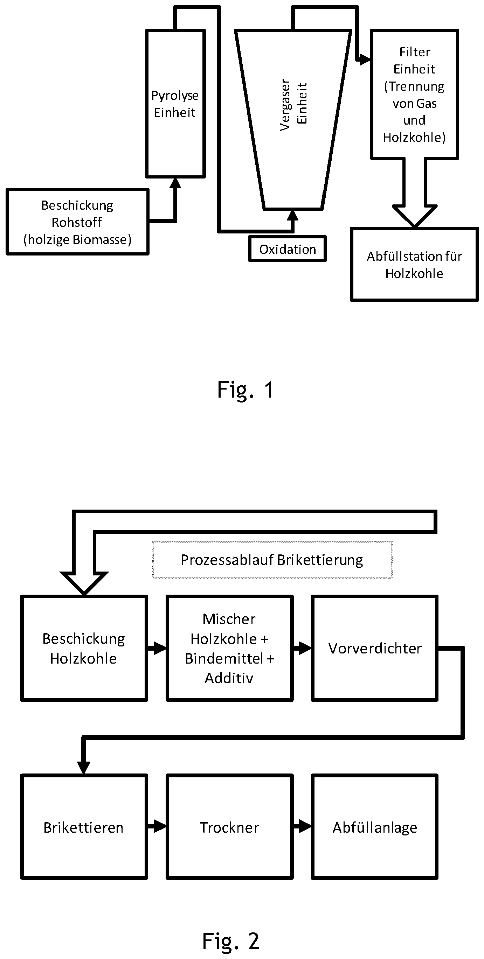

Die Schwebebett-Technologie beschreibt einen neuen Weg bei der thermochemischen Vergasung von Biomasse. Der Schwebebett-Reaktor beschreibt ein einzigartiges Reaktordesign und den Betrieb davon. Der Prozess ist in Figur 1 dargestellt.

Vergleichbare Vergasungskonzepte zeigen klare Nachteile bei der Möglichkeit diese zu skalieren. Ferner hat beispielsweise die Wirbelschichtvergasung Probleme bei den Teer-Konzentrationen im Produktgas und Festbettsysteme haben Probleme durch das Verdichten des Brennstoffes und dem Austausch zwischen fester und gasförmiger Phase.

Die Idee des schwebenden Festbettreaktors besteht darin, eine strukturierte Schüttung an Brennstoff aufzubauen, welche auf dem Einlassgasstrom der Pyrolyse und Oxidation schwebt. Ohne eine unkontrollierte Partikelbewegung in der Reduktionszone und eine nur relative Bewegung der Brennstoffteilchen innerhalb des Schwebebettes, können verhältnismäßig lange Gasverweilzeit erreicht werden, was zu niedrigen Teer-Konzentrationen im Produktgas führt. Diese niedrigen Teer-Konzentrationen und die einzigartige Betriebsführung eines Schwebebett-Reaktors führen zu einer sehr hochwertigen und "reinen" Holzkohle welche aus dem Prozess als Nebenprodukt ausgeschleust wird. Die Technologie hat mittlerweile bewiesen, durch mehr als 100.000 Betriebsstunden in kommerziellen Anlagen, die Probleme vergleichbarer Vergasungstechnologien zu umgehen.

Wie in Fig. 1 dargestellt wird im Vergasungsverfahren zuerst Biomasse, insbesondere Waldhackgut, in eine Pyrolyseeinheit geleitet, in welcher der Vollstrom aus festem, flüssigem und gasförmigem Material entsteht. Danach wird der Vollstrom mithilfe eines Vergasungsmittels in der Oxidationseinheit partiell oxidiert und pneumatisch transportiert. Der partiell oxidierte Vollstrom kommt danach in die Reduktions- bzw. Vergasereinheit, deren Querschnitt im Wesentlichen kegelförmig ist, wo sich das Schwebebett bildet. Über einen Überlauf gelangt die rohe Holzkohle aus der Reduktionseinheit in die Filter Einheit, wo über einen Heißgasfilter die Trennung von Gas und Holzkohle vollzogen wird. Das Gas kommt danach zur energetischen Verwertung in einen Gas-Brenner oder Gasmotor, während die erfindungsgemäße Holzkohle nach dem Ablöschen mit Wasser direkt weiterverarbeitet oder in eine Abfüllstation geleitet werden kann.

Die vorliegende Erfindung betrifft des Weiteren eine Verarbeitung und Veredelung der einzigartigen Holzkohle, welche im Schwebebett Vergasungsprozess entsteht.

Die Besonderheiten der im oben beschriebenen Verfahren entstandenen Holzkohle sind:
- Die Holzkohle wird durch regional bereitgestelltes Waldhackgut anhand der Schwebebett Vergasungstechnologie hergestellt. Das Waldhackgut wird aus den bei der Läuterung, Durchforstung und Ernte von Wäldern anfallenden geringwertigen Hölzern gewonnen. Unter dem Sortiment Hackgut versteht man zur Herstellung von Waldhackschnitzeln vorgesehenes Holz. Es kann sich aus entasteten und unentasteten Stammteilen, Baumkronen, Ästen und schadhaften Vollbäumen zusammensetzen. Trotz dieses nicht sehr hochwertigen Ausgangsholzes ermöglicht die verwendete Technologie die Herstellung von besonders hochwertiger und schadstofffreier Holzkohle. Eine wichtige Rolle spielt dabei unter anderem der verwendete Heißgasfilter, welcher eine Kondensation von schadhaften PAKs, welche bei der thermochemischen Vergasung der Biomasse entstehen, an der Holzkohle verhindert. Im Gegensatz zur Kaltfiltrierung wird bei einer Filtrierung bei über 250 °C verhindert, dass aus dem Vergasungsprozess eine mit Teer verunreinigte Kohle entsteht, welche nach den gesetzlichen Grenzwerten nur noch Abfall ist. Außerdem kann nur eine reine, schadstofffreie Holzkohle zu Grill-Holzkohle weiterverarbeitet werden, um die höchsten Qualitätsansprüche zu erreichen.
- Die Holzkohle hat einen Kohlenstoffanteil von 68 bis 95 Gew.%, vorzugsweise von 75 bis 93 Gew.% und besonders bevorzugt von 80 bis 92 Gew.% an der Trockenmasse.
- Die Holzkohle hat einen Ascheanteil von 4 bis 18 Gew.%, vorzugweise von 5 bis 13 Gew.% und besonders bevorzugt 6 bis 10 Gew.% an der Trockenmasse.
- Die Holzkohle wird Feucht verarbeitet und hat einen Wasseranteil von 5 bis 50 Gew.%, vorzugsweise von 10 bis 40 Gew.% und besonders bevorzugt von 15 bis 35 Gew.% an der Gesamtmasse. Das Wasser wird dabei zur Ablöschung der Holzkohle nach der Heißgasfiltration zugesetzt. In einer weiteren Ausführungsvariante kann der Wasseranteil auch 20 bis 50 Gew.%, vorzugsweise von 25 bis 40 Gew.% und besonders bevorzugt von 28 bis 35 Gew.% an der Gesamtmasse betragen.
- Die Holzkohle ist als pulvrige Holzkohle mit einer mittleren Partikelgröße d₅₀ zwischen 30 bis 300 µm, vorzugsweise zwischen 40 bis 250 µm und besonders bevorzugt zwischen 50 bis 200 µm anzusehen.

Eine solche Holzkohle mit der oben angegebenen Zusammensetzung und einem Kohlenstoffanteil von bis zu 95 Gew.% der Trockenmasse kann sonst nur in einem reinen Pyrolyse-Verfahren hergestellt werden. Dies liegt vor allem daran, dass in einem anschließenden Vergasungsprozess die Holzkohle weiter Energie verlieren muss, welche in Gas umgesetzt wird. Die Effizienz des Schwebebett Vergasungsverfahrens ermöglicht aber eine Herstellung der sehr hochwertigen Holzkohle.

Eine erfindungsgemäße Verarbeitung dieser Holzkohle ist ein Verfahren zur Herstellung von hochwertigen Grill-Holzkohle-Briketts. Die Verarbeitung erfolgt nach dem in Fig. 2 dargestellten Prozess.

Wie in Fig. 2 gezeigt wird zuerst die Holzkohle, mit den oben genannten Eigenschaften, in die Brikettier-Linie beschickt. Dazu wird die Holzkohle aus der Transportverpackung in den Behälter der Beschickungs-Anlage geleert. In der Beschickungs-Anlage wird anhand von Fördereinrichtungen wie beispielsweise Hydraulikzylinder, Tarnsportschnecken und Förderbänder eine Homogenisierung der Holzkohle vorgenommen.
- Die homogenisierte Holzkohle gelangt wiederum über Fördereinrichtungen in den Misch-Apparat, wo die Holzkohle mit Bindemittel und optional auch mit Additiven vermengt wird. Zur Herstellung von Briketts aus Holzkohle ist die Zugabe eines Bindemittels erforderlich, da die Holzkohle wenig bis kein formbares, plastisches Material enthält. Der Bindemittel-Anteil beträgt dabei 0,5 bis 20 %, vorzugsweise 1 bis 15 % und besonders bevorzugt 2 bis 10 % der Trockenmasse. Als Bindemittel kommen unterschiedliche Stärken (z.B. Weizen, Roggen, Mais), Zuckerlösungen (z.B. Zuckerrohrmelasse, Rübenmelasse), Cellulose-Verbindungen oder besonders bevorzugt Bindemittel aus pflanzlichen Ölen oder Fetten, welche recycelt sein können, zum Einsatz. Die Verwendung von pflanzlichen Ölen bzw. Fetten als Bindemittel findet sich nicht im Stand der Technik und würde einen ökologischen Einsatz von recycelten Ölen und Fetten ermöglichen.
- Der Anteil der Additive beträgt 0 bis 10 %, vorzugsweise 0,5 bis 8 % und besonders bevorzugt 1 bis 5 % der Trockenmasse. Als Additiv kommen Stoffe wie beispielsweise Ton oder Ton-Erden, Kalzium-Verbindungen, Gummi-Arabicum oder andere Tonmineralien zum Einsatz. Diese Additive werden optional beigemengt, um spezifische Eigenschaften der Grill-Holzkohle, wie beispielweise Anzündverhalten und Festigkeit, zu verbessern. Ferner können als Additiv auch unterschiedliche geruchsintensive Naturstoffe und unverkohlte Materialien beigemengt werden. Eine Voraussetzung an die verwendeten Additive ist natürlich die Lebensmitteltauglichkeit.
- Die Holzkohle/Bindemittel/Additiv-Mischung gelangt wie in Fig. 2 schematisch dargestellt wiederum über Fördereinrichtungen in den Vorverdichter, wo die erforderliche mechanische Stabilität der Holzkohle-Briketts erreicht wird. Hierbei wird das Holzkohle/Bindemittel/Additiv-Gemisch in einem Behälter von Walzen vorverdichtet. Die Verdichtungszeit beträgt 1 bis 30 Minuten, vorzugsweise 2 bis 20 Minuten und besonders bevorzugt 3 bis 10 Minuten, und kann mithilfe von Leistung, das heißt mit einer höheren Drehzahl der Walzen, verringert werden.
- Die vorverdichtete Holzkohle/Bindemittel/Additiv-Mischung gelangt wiederum über Fördereinrichtungen in eine hydraulische Rollen-Brikettier-Anlage, wo die vorverdichtete Holzkohle/Bindemittel/Additiv-Mischung über mindestens zwei Walzen mit formgebenden Mulden geleitet wird. Hierbei wird ein Anpressdruck von 1 bis 12 bar, vorzugsweise von 1,5 bis 9 bar und besonders bevorzugt von 2 bis 7 bar eingestellt. Der Anpressdruck muss dabei wesentlich höher sein als für pyrolytische Holzkohle. Diese aus einem reinen Pyrolyse-Prozess entstandene Kohle ist wesentlich dichter als die erfindungsgemäße Holzkohle, da sich im Vergasungsschritt flüchtige Anteile lösen, und benötigt daher weniger Druck zur Verdichtung.
- Die brikettierten, noch feuchten Holzkohle-Briketts gelangen wiederum über Fördereinrichtungen in einen Konvektions-Trockner. Im Trockner werden die feuchten Holzkohle-Briketts schichtweise auf luftdurchlässigen Förderbändern aufgetragen, wobei eine Trocknungstemperatur von 50 bis 140 °C, vorzugsweise von 65 bis 110 °C und besonders bevorzugt von 75 bis 105 °C eingestellt wird. Die Höhe der Trocknungstemperatur skaliert dabei mit der Stärke der Gebläseleistung.
- Die trockenen Holzkohle-Briketts gelangen wiederum über Fördereinrichtungen in eine Abfüllanlage. In der Abfüllanlage werden die trockenen Holzkohle-Briketts in geeigneten Verpackungen wie beispielsweise Kraft-Papier, Karton, Stoffsäcken oder Kunststoffverpackungen abgesackt und anschließend gelagert.

Eine weitere Verarbeitung der erfindungsgemäßen Holzkohle wird durch ein Verfahren zur Herstellung hochwertiger Aktiv-Holzkohle und konfektionierter Aktiv-Holzkohle ermöglicht. Dieses Verfahren bietet eine ökologische Möglichkeit zur Erzeugung von Aktivkohle, die zum Großteil (ungefähr 80 % der weltweit erzeugten Aktivkohle) aus fossiler Kohle hergestellt wird. Der restliche Teil der Aktivkohle wird meist aus Kokosnussschalen hergestellt. Holzkohle wird, wenn überhaupt, nur als aus Hartholz hergestellte Holzkohle zu Aktivkohle verarbeitet, wobei es sich beim Hartholz meist um Tropenhölzer handelt. Zusätzlich zum ökologischen Aspekt hat die erfindungsgemäße Holzkohle schon vor der Aktivierung eine innere Oberfläche von ca. 200 - 400 m²/g, während fossile Kohle keinerlei Aktivität aufweist.

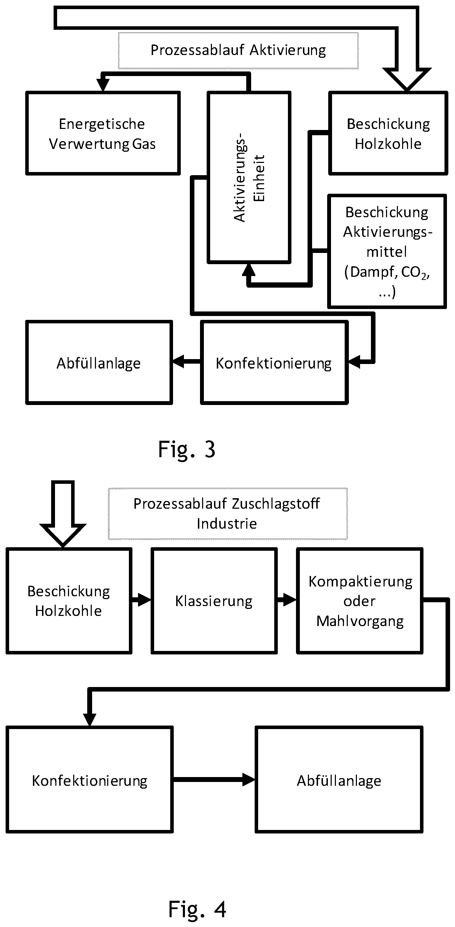

Die Verarbeitung zu Aktiv-Holzkohle erfolgt nach dem in Fig. 3 dargestellten Prozess und beinhaltet folgende Schritte:
- Ähnlich wie im Verfahren zur Herstellung der Grill-Holzkohle wird auch hier wie in Fig. 3 dargestellt zuerst die erfindungsgemäße Holzkohle in diesem Fall in die Aktivierungs-Einheit beschickt. Dazu wird wiederum die Holzkohle aus der Transportverpackung in den Behälter der Beschickungs-Anlage geleert. Alternativ kann die Beschickung der Holzkohle auch direkt aus einem laufenden Schwebebett-Holzvergasungs-Prozess erfolgen. In der Beschickungs-Anlage wird anhand der Fördereinrichtung (z.B. Hydraulikzylinder, Tarnsportschnecken, Förderbänder) eine Homogenisierung der Holzkohle vorgenommen.
- Die homogenisierte Holzkohle gelangt wiederum über Fördereinrichtungen in die Aktivierungs-Einheit, wo die Holzkohle mit dem Aktivierungsmittel, meistens Wasserdampf oder Kohlendioxid, in Kontakt kommt. Wie in Fig. 3 dargestellt wird das Aktivierungsmittel wie die Holzkohle über Fördereinrichtungen in die Aktivierungs-Einheit geleitet. Die Temperaturen in der Aktivierungs-Einheit betragen 600 bis 1100 °C, vorzugsweise 700 bis 1000 °C und besonders bevorzugt 800 bis 950 °C. Nach Stand der Technik beträgt die Aktivierungstemperatur von gängiger Kohle 1000 bis 1100 °C. Bei Verwendung von erfindungsgemäßer Holzkohle kann eine niedrigere Temperatur gewählt werden, da die Holzkohle schon einen Vergasungsschritt durchgemacht hat. Die Aktivierungszeit beträgt 5 - 180 Minuten, vorzugsweise 10 bis 120 Minuten und besonders bevorzugt 15 bis 90 Minuten.
   Ferner wird bei der Aktivierung ein spezifischer Umsatz des Aktivierungsmittels pro 1 g Holzkohle von 0,1 bis 2 g, vorzugsweise 0,3 bis 1,8 g und besonders bevorzugt von 0,4 bis 1,6 g eingestellt.
   Da bei der Aktivierung ebenfalls ein Vergasungsprozess stattfindet, entsteht wie schon bei der Herstellung der erfindungsgemäßen Holzkohle ebenfalls Holzgas. Dieses aus der Aktivierungs-Einheit entstehende Holzgas wird energetisch in einem Gasbrenner oder Gasmotor verwertet.
- Nach der Aktivierung gelangt die aktivierte Holzkohle wiederum über Fördereinrichtungen zur Konfektionierung, wo Nachbehandlungsschritte der aktivierten Holzkohle durchgeführt werden. Dabei können aus der pulvrigen, aktivierten Holzkohle Kompakte und Agglomerate wie beispielsweise Pellets und Granulate hergestellt werden. Des Weiteren kann die pulvrige, aktivierte Holzkohle mit unterschiedliche mineralischen Stoffen und Stoffen wie beispielsweise Kalium-, Natrium- oder Kalziumsalzen imprägniert werden.
- Die konfektionierte aktivierte Holzkohle gelangt wiederum über Fördereinrichtungen zur Abfüllanlage, wo die Aktiv-Holzkohle in geeigneten Verpackungen wie beispielsweise Kraft-Papier, Karton, Stoffsäcken oder Kunststoffverpackungen abgesackt und anschließend gelagert wird.

Die so aktivierte erfindungsgemäße Holzkohle hat dann eine innere Oberfläche von ca. 1000 m²/g, wobei hoch aktivierte Labor-Aktiv-Holzkohle mit einer inneren Oberfläche von bis zu 2000 m²/g herstellbar ist. Gemessen und ausgewertet wird die innere Oberfläche der Aktiv-Holzkohle mithilfe der BET (Brunauer-Emmert-Teller) -Methode.

Der zweite wesentliche Parameter zur Klassifizierung von Aktivkohle ist die Porengröße, wobei zwischen Mirko-, Meso-, und Makroporen unterschieden wird. Die erfindungsgemäße Aktiv-Holzkohle kann spezifisch auf Ihren Anwendungsfall in Ihrer Porenstruktur eingestellt werden. So können Aktiv-Holzkohlen mit einer vorzugsweise Mikro- oder vorzugsweise Meso- oder vorzugsweise Makrostruktur hergestellt werden.

Gemessen wird das Porenvolumen mithilfe eines Verfahrens zur Stickstoffadsorption bei ca. 71 K, wobei die Auswertung des Verfahrens anhand der BJH (Barrett, Joyner und Halenda) - Methode erfolgen kann.

Eine weitere Verarbeitung der erfindungsgemäßen Holzkohle ergibt sich aus einem Verfahren zur Herstellung eines Zuschlagstoffs für die Bauindustrie.

Die Verarbeitung erfolgt nach dem in Figur 4 dargestellten Prozess:
- Zuerst wird die erfindungsgemäße Holzkohle in die Aufbereitungs-Einheit für Industrie-Holzkohle beschickt. Dabei wird die Holzkohle wiederum aus der Transport Verpackung in den Behälter der Beschickungs-Anlage geleert.
- Die Holzkohle gelangt wiederum über Fördereinrichtungen zur Klassier-Einheit. Zur Verarbeitung als Industrie-Holzkohle wird die Holzkohle in unterschiedliche Fraktionen aufgeteilt. Die Aufteilung erfolgt in eine "Grob-", "Mittel-" und "Feinfraktion":
   ∘ Die "Grobfraktion" ist in einem Bereich von ca. 0,4 bis 10 mm, vorzugsweise ca. 0,3 bis 6 mm und besonders bevorzug von ca. 0,25 bis 4 mm.
   ∘ Die "Mittelfraktion" ist in einem Bereich von ca. 100 bis 400 µm, vorzugsweise ca. 75 bis 300 µm und besonders bevorzugt ca. 50 bis 250 µm.
   ∘ Die "Feinfraktion" ist in einem Bereich von ca. 0 bis 100 µm, vorzugsweise ca. 0 bis 75 µm und besonders bevorzugt ca. 0 bis 50 µm.
- Nach der Aufteilung gelangt die Industrie-Holzkohle wie in Fig. 4 dargestellt wiederum über Fördereinrichtungen zur Kompaktierungs- bzw. Mahl-Einheit, wo die Industrie-Holzkohle je nach gewünschtem Produkt zu einem Kompakt oder zu feinerem Material verarbeitet werden kann.
   Im Fall der Kompaktierung wird die kompaktierte Industrie-Holzkohle anhand von Fördereinrichtung zur Konfektionierung transportiert.
   Im Fall des Mahlprozesses wird die gemahlene Industrie-Holzkohle anhand von Fördereinrichtungen zur Klassierung transportiert.
- Danach gelangt die Industrie-Holzkohle wiederum über Fördereinrichtungen zur Konfektionierung, wo Nachbehandlungsschritte durchgeführt werden. Aus der zumeist pulvrigen Industrie-Holzkohle können Kompakte und Agglomerate wie beispielsweise Briketts, Pellets und Granulate hergestellt werden. Ferner kann die zumeist pulvrigen Industrie-Holzkohle mit unterschiedliche mineralischen und Stoffen wie beispielsweise Kalium-, Natrium-, Kalziumsalzen imprägniert werden.
- Die konfektionierte Industrie-Holzkohle gelangt schlussendlich wiederum über Fördereinrichtungen zur Abfüllanlage, wo die konfektionierte Industrie-Holzkohle in geeigneten Verpackungen wie beispielsweise Kraft-Papier, Karton, Stoffsäcken oder Kunststoffverpackungen abgesackt und anschließend gelagert wird.

Die Verwendung von Holzkohle als Zuschlagstoff in Beton ermöglicht einerseits leichtere Betonbauteile aufgrund der geringeren Dichte von Holzkohle und andererseits bietet die Holzkohle im Beton eine Isolierung anhand der sinkenden Wärmeleitfähigkeit, welche auch für den Brandschutz große Vorteile bringt.

Für die Verwendung von Holzkohle als Zuschlagstoff und in der metallverarbeitenden Industrie ist deren Herstellung und Verarbeitung überaus relevant, da die Holzkohle im Gegensatz zur Aktiv-Holzkohle sehr unreaktiv sein sollte. Daher ist ein Großteil der in diesem Bereich verwendeten Kohle fossil. Die erfindungsgemäße Holzkohle bietet demnach eine ökologische Alternative zur verwendeten fossilen Kohle.

## Patentansprüche

1. Verfahren zur Herstellung von Holzkohle umfassend die Schritte:
a) Zuführen von Biomasse, insbesondere Waldhackgut, in eine Pyrolyseeinheit, in welcher das Waldhackgut zu einem festes, flüssiges und gasförmiges Material aufweisenden Vollstrom pyrolysiert wird,
b) Zuführen des Vollstroms und eines Vergasungsmittels in eine Oxidationseinheit, wobei der Vollstrom zumindest partiell oxidiert und pneumatisch transportiert wird,
c) Zuführen des partiell oxidierten Vollstroms aus der Oxidationseinheit in eine im Wesentlichen senkrecht angeordneten Reduktionseinheit, wobei der Materialausgang der Oxidationseinheit mit der Reduktionseinheit verbunden ist, wobei sich der Querschnitt der Reduktionseinheit mit zunehmender Distanz vom Materialausgang der Oxidationseinheit vergrößert, die Strömungsgeschwindigkeit des Vollstroms in der Reduktionseinheit an das Material des Vollstroms und an die Form des Strömungsquerschnitts der Reduktionseinheit so angepasst ist, dass sich ein stabiles in Schwebe gehaltenes Festbett in der Reduktionseinheit ausbildet,
d) Entnehmen der rohen Holzkohle aus der Reduktionseinheit über einen Überlauf,
e) Abtrennen von gasförmigen Bestandteilen in einem Heißgasfilter und Sammeln der Holzkohle und
f) Ablöschen der gesammelten Holzkohle mit Wasser,
wobei die Holzkohle
• einen Trockenmasseanteil von 68 bis 95 %, vorzugsweise von 75 bis 93 % und besonders bevorzugt von 80 bis 92 % an Kohlenstoff,
• einen Trockenmasseanteil von 4 bis 18 %, vorzugsweise von 5 bis 13 % und besonders bevorzugt von 6 bis 10 % an Asche,
• einen Masseanteil von 5 bis 50 %, vorzugsweise von 10 bis 40 % und besonders bevorzugt von 15 bis 35 % an Wasser,
• und vorzugsweise eine innere Oberfläche von 200 bis 400 m²/g aufweist.

2. Verfahren zur Herstellung von Holzkohle nach Anspruch 1, wobei die gasförmigen Bestandteile im Heißgasfilter bei einer Temperatur von 250 bis 600 °C abgetrennt werden.

3. Verfahren zur Herstellung von Holzkohle nach Anspruch 2, wobei der Heißgasfilter poröse Keramiken aufweist.

4. Verfahren zur Herstellung von Grill-Holzkohle-Briketts, **dadurch gekennzeichnet, dass** Holzkohle nach einem Verfahren nach einem der Ansprüche 1 bis 3 bereitgestellt wird, umfassend die nachfolgenden Schritte:
• Beschickung der Holzkohle in die Brikettier-Linie, wobei in der Beschickungsanlage eine Homogenisierung der Holzkohle erfolgt,
• Vermengung der homogenisierten Holzkohle mit Bindemitteln und vorzugsweise Additiven im Misch-Apparat,
• Vorverdichtung der Holzkohle/Bindemittel/Additiv-Mischung mithilfe von Walzen für 1 bis 30 Minuten, vorzugsweise für 2 bis 20 Minuten und besonders bevorzugt für 3 bis 10 Minuten im Vorverdichter,
• Brikettierung der vorverdichteten Holzkohle/Bindemittel/Additiv-Mischung in der hydraulischen Rollen-Brikettier-Anlage, wobei die Mischung über zumindest zwei Walzen mit formgebenden Mulden bei einem Anpressdruck von 1 bis 12 bar, vorzugsweise von 1,5 bis 9 bar und besonders bevorzugt von 2 bis 7 bar geleitet wird,
• Trocknung der Holzkohle-Briketts bei einer Trocknungstemperatur von 50 bis 140 °C, vorzugsweise von 65 bis 110 °C und besonders bevorzugt von 75 bis 105 °C in einem Konvektionstrockner,
• Verpackung der trockenen Holzkohle-Briketts in einer Abfüllanlage.

5. Verfahren nach Anspruch 4, **dadurch gekennzeichnet, dass** die Bindemittel aus der Gruppe der vorzugsweise recycelten pflanzlichen Öle bzw. Fette, Stärken, Zuckerlösungen und Cellulose-Verbindungen gewählt werden und einen Masseanteil von 0,5 bis 20 %, vorzugsweise von 1 bis 15 % und besonders bevorzugt von 2 bis 10 % an der Trockenmasse der Holzkohle-Briketts haben.

6. Verfahren nach einem der Ansprüche 4 und 5, **dadurch gekennzeichnet, dass** die Additive aus der Gruppe der Kalzium-Verbindungen, Ton-Erden, Gummi-Arabicum und Tonmineralien gewählt werden und einen Masseanteil von 0 bis 10 %, vorzugsweise 0,5 bis 8 % und besonders bevorzugt 1 bis 5 % an der Trockenmasse der Holzkohle-Briketts haben.

7. Verfahren zur Herstellung von Aktiv-Holzkohle, **dadurch gekennzeichnet, dass** Holzkohle nach einem Verfahren nach einem der Ansprüche 1 bis 3 bereitgestellt wird, umfassend die nachfolgenden Schritte:
• Beschickung der Holzkohle in die Aktivierungs-Einheit, wobei in der Beschickungsanlage eine Homogenisierung der Holzkohle vorgenommen wird,
• Aktivierung der homogenisierten Holzkohle in der Aktivierungs-Einheit mit einem Aktivierungsmittel, vorzugsweise Wasserdampf oder Kohlendioxid, bei einer Temperatur von 600 bis 1100 °C, vorzugsweise 700 bis 1000 °C und besonders bevorzugt 800 bis 950 °C für 5 bis 180 Minuten, vorzugsweise 10 bis 120 Minuten und besonders bevorzugt 15 bis 90 Minuten, wobei der Umsatz des Aktivierungsmittels pro 1 g Holzkohle mit 0,1 bis 2 g, vorzugsweise 0,3 bis 1,8 g und besonders bevorzugt 0,4 bis 1,6 g gewählt wird,
• Konfektionierung der aktivierten Holzkohle,
• Verpackung der konfektionierten aktivierten Holzkohle in der Abfüllanlage.

8. Verfahren zur Herstellung von Industrie-Holzkohle, insbesondere einen Zuschlagstoff für Beton oder einen Sekundärrohstoff für die metallverarbeitende Industrie, **dadurch gekennzeichnet, dass** Holzkohle nach einem Verfahren nach einem der Ansprüche 1 bis 3 bereitgestellt wird, umfassend die nachfolgenden Schritte:
• Beschickung der Holzkohle in die Aufbereitungs-Einheit,
• Aufteilung der Holzkohle in der Klassier-Einheit, wobei je nach Partikelgröße in eine Grob-, Mittel- und Feinfraktion aufgeteilt wird, wobei die Grobfraktion eine Partikelgröße von 0,4 bis 10 mm, vorzugsweise 0,3 bis 6 mm und besonders bevorzugt 0,25 bis 4 mm umfasst, wobei die Mittelfraktion eine Partikelgröße von 100 bis 400 µm, vorzugsweise 75 bis 300 µm und besonders bevorzugt 50 bis 250 µm umfasst, wobei die Feinfraktion eine Partikelgröße von 0 bis 100 µm, vorzugsweise 0 bis 75 µm und besonders bevorzugt 0 bis 50 µm umfasst,
• Verarbeitung der aufgeteilten Holzkohle je nach Fraktion zu einem Kompakt oder zu feinerem Material in der Kompaktierungs- bzw. Mahl- Einheit, wobei nach dem Mahlprozess die feinere Holzkohle erneut in die Klassier-Einheit geleitet und aufgeteilt wird,
• Konfektionierung der kompaktierten Industrie-Holzkohle,
• Verpackung der konfektionierten Industrie-Holzkohle in der Abfüllanlage.

9. Verfahren nach Anspruch 7 oder 8, **dadurch gekennzeichnet, dass** aus der Holzkohle in der Konfektionierung Kompakte und Agglomerate wie zum Beispiel Briketts, Pellets und Granulate hergestellt werden.

10. Verfahren nach einem der Ansprüche 7 bis 9, **dadurch gekennzeichnet, dass** die Holzkohle in der Konfektionierung mit vorzugsweise mineralischen Stoffen wie zum Beispiel Kalium-, Natrium-, und Kalziumsalze imprägniert wird.

11. Verfahren nach einem der Ansprüche 4 bis 10, **dadurch gekennzeichnet, dass** in der Abfüllanlage Verpackungen aus der Gruppe der Kraft-Papiere, Kartons, Stoffsäcke und Kunststoffverpackungen gewählt werden.

12. Verfahren zur Herstellung eines Dämmstoffs umfassend, **dadurch gekennzeichnet, dass** Holzkohle nach einem Verfahren gemäß einem der Ansprüche 1 bis 3 hergestellt wird und mit einem Dämmmaterialrohstoff vermischt und zu Dämmstoff verarbeitet wird.

## Claims

1. A method for producing charcoal, comprising the steps of:
a) introducing biomass, in particular forest woodchips, into a pyrolysis unit in which the forest woodchips are pyrolyzed to a full stream comprising solid, liquid and gaseous material,
b) introducing the full stream and a gasification agent into an oxidation unit, the full stream being at least partially oxidized and transported pneumatically,
c) introducing the partially oxidized full stream from the oxidation unit into a reduction unit arranged essentially perpendicularly, the material outlet of the oxidation unit being connected to the reduction unit, the cross-section of the reduction unit becoming larger as the distance from the material outlet of the oxidation unit increases, and the flow rate of the full stream in the reduction unit being adapted to the material of the full stream and to the shape of the stream cross-section of the reduction unit so that a stable fixed bed kept in suspension is formed in the reduction unit,
d) retrieving the raw charcoal from the reduction unit via an overflow,
e) separating gaseous components in a hot gas filter and collecting the charcoal, and
f) quenching the collected charcoal with water, the charcoal
• having a dry matter content of 68 to 95 %, preferably of 75 to 93 %, and particularly preferably of 80 to 92 %, of carbon,
• having a dry matter content of 4 to 18 %, preferably of 5 to 13 %, and particularly preferably of 6 to 10 %, of ash,
• having a mass fraction of 5 to 50 %, preferably 10 to 40 %, and particularly preferably of 15 to 35 %, of water,
• and having an inner surface of 200 to 400 m²/g.

2. The method for producing charcoal according to claim 1 wherein the gaseous components are separated in the hot gas filter at a temperature of 250 to 600 °C.

3. The method for producing charcoal according to claim 2 wherein the hot gas filter has porous ceramics.

4. A method for producing grilling charcoal briquettes **characterized in that** charcoal is provided according to a method of one of claims 1 to 3, comprising the following steps:
• feeding charcoal into a briquetting line, wherein homogenization of the charcoal takes place in the feeding system,
• mixing the homogenized charcoal with binders and preferably additives in a mixing apparatus,
• pre-compacting the charcoal/binder/additive mixture by means of rollers for 1 to 30 minutes, preferably for 2 to 20 minutes, and particularly preferably for 3 to 10 minutes, in the pre-compactor,
• briquetting the pre-compacted charcoal/binder/additive mixture in the hydraulic roller briquetting system, wherein the mixture is conducted over at least two rollers with shaping recesses with a contact pressure of 1 to 12 bar, preferably of 1.5 to 9 bar, and particularly preferably of 2 to 7 bar,
• drying the charcoal briquettes at a drying temperature of 50 to 140 °C, preferably of 65 to 110 °C, and particularly preferably of 75 to 105 °C, in a convection dryer,
• packing the dry charcoal briquettes in a filling system.

5. The method according to claim 4 **characterized in that** the binders are selected from the group of preferably recycled vegetable oils or fats, starches, sugar solutions, and cellulose compounds, and have a mass fraction of 0.5 to 20 %, preferably of 1 to 15 %, and particularly preferably of 2 to 10 %, of the dry mass of the charcoal briquettes.

6. The method according to any one of the claims 4 and 5 **characterized in that** the additives are selected from the group of calcium compounds, clay, gum Arabic, and clay minerals, and have a mass fraction of 0 to 10 %, preferably 0.5 to 8 %, and particularly preferably of 1 to 5 %, of the dry mass of the charcoal briquettes.

7. A method for producing active charcoal **characterized in that** charcoal is provided according to the method of one of claims 1 to 3, comprising the following steps:
• feeding charcoal into an activation unit, wherein homogenization of the charcoal takes place in the feeding system,
• activating the homogenized charcoal in the activation unit with an activation agent, preferably water vapor or carbon dioxide, at a temperature of 600 to 1100 °C, preferably 700 to 1000 °C, and particularly preferably 800 to 950 °C, for 5 to 180 minutes, preferably 10 to 120 minutes, and particularly preferably 15 to 90 minutes, turnover of the activation agent per 1 g of charcoal being selected to be 0.1 to 2 g, preferably 0.3 to 1.8 g, and particularly preferably 0.4 to 1.6 g,
• customizing the activated charcoal,
• packing the customized activated charcoal in a filling system.

8. A method for producing industrial charcoal, in particular an aggregate for concrete or a secondary raw material for the metalworking industry, **characterized in that** charcoal is produced according to the method of one of claims 1 to 3, comprising the following steps:
• feeding charcoal into a treating unit,
• separating the charcoal in a classifying unit into coarse, medium and fine fractions according to the particle size, wherein the coarse fraction comprises a particle size of 0.4 to 10 mm, preferably 0.3 to 6 mm, and particularly preferably 0.25 to 4 mm, wherein the medium fraction comprises a particle size of 100 to 400 µm, preferably 75 to 300 µm, and particularly preferably 50 to 250 µm, wherein the fine fraction comprises a particle size of 0 to 100 µm, preferably 0 to 75 µm, and particularly preferably 0 to 50 µm,
• processing the separated charcoal depending on the fraction to a compact or a finer material in a compacting or grinding unit, wherein after the grinding process, the finer charcoal is again fed into the classification unit and separated,
• customizing the compacted industrial charcoal,
• packing the customized industrial charcoal in a filling system.

9. The method according to claim 7 or 8, **characterized in that** compacts and agglomerates, such as briquettes, pellets and granules, are produced from the charcoal during customizing.

10. The method according to any one of the claims 7 to 9 **characterized in that** the charcoal is impregnated with preferably mineral substances such as potassium, sodium and calcium salts during customizing.

11. The method according to any one of the claims 4 to 10 **characterized in that** packaging in the filling system is selected from the group of kraft paper, cardboard, cloth bags, and plastic packaging.

12. A method for producing an insulation material **characterized in that** charcoal is produced according to a method of any one of the claims 1 to 3 and mixed with an insulation raw material and processed into an insulation material.

## Revendications

1. Procédé de fabrication de charbon de bois
comprenant les étapes suivantes :
a) introduction de biomasse, en particulier de déchets forestiers, dans une unité de pyrolyse dans laquelle les déchets forestiers sont pyrolysés pour obtenir un flux total présentant de la matière solide, liquide et solide,
b) introduction du flux total et d'un agent de gazéification dans une unité d'oxydation, le flux total étant au moins partiellement oxydé et transporté de façon pneumatique,
c) introduction du flux total partiellement oxydé de l'unité d'oxydation dans une unité de réduction agencée sensiblement verticalement, la sortie de matière de l'unité d'oxydation étant reliée avec l'unité de réduction, la section de l'unité de réduction augmentant avec la distance par rapport à la sortie de matière de l'unité d'oxydation, et la vitesse d'écoulement du flux total dans l'unité de réduction étant adaptée à la matière du flux total et à la forme de la section d'écoulement de l'unité de réduction de sorte qu'un lit fixe maintenu en suspension stable se forme dans l'unité de réduction,
d) élimination du charbon de bois brut de l'unité de réduction par un trop plein,
e) séparation des composants gazeux dans un filtre à gaz chaud et collecte du charbon de bois et
f) extinction du charbon de bois collecté avec de l'eau, le charbon de bois présentant
• une teneur de l'extrait sec en carbone de 68 à 95%, de préférence de 75 à 93% et de façon particulièrement préférée de 80 à 92%,
• une teneur de l'extrait sec en cendre de 4 à 18%, de préférence de 5 à 13% et de façon particulièrement préférée de 6 à 10%,
• une teneur en masse en eau de 5 à 50%, de préférence de 10 à 40% et de façon particulièrement préférée de 15 à 35%,
• et une surface interne de 200 à 400 m²/g.

2. Procédé de fabrication de charbon de bois selon la revendication 1, selon lequel les composants gazeux dans le filtre à gaz chaud sont séparés à une température de 250 à 600 °C.

3. Procédé de fabrication de charbon de bois selon la revendication 2, selon lequel le filtre à gaz chaud présente des céramiques poreuses.

4. Procédé de fabrication de briquettes de charbon de bois pour grill, **caractérisé en ce que** le charbon de bois est préparé selon un procédé selon une des revendications 1 à 3, comprenant les étapes suivantes :
• chargement du charbon de bois dans une ligne de briquetage, une homogénéisation du charbon de bois se produisant dans l'installation de chargement,
• mélange du charbon de bois homogénéisé avec des liants et de préférence des additifs dans l'appareil à mélanger,
• pré-densification mélange charbon de bois/liant/additif à l'aide de rouleaux pendant 1 à 30 minutes, de préférence pendant 2 à 20 minutes et de façon particulièrement préférée pendant 3 à 10 minutes dans le pré-densificateur,
• briquetage du mélange charbon de bois/liant/additif pré-densifié dans l'installation de briquetage hydraulique à roulettes, le mélange étant conduit sur au moins deux rouleaux avec des auges de moulage à une pression de serrage de 1 à 12 bars, de préférence de 1,5 à 9 bars et de façon particulièrement préférée de 2 à 7 bars,
• séchage des briquettes de charbon de bois à une température de séchage de 50 à 140 °C, de préférence de 65 à 110 °C et de façon particulièrement préférée de 75 à 105 °C dans un séchoir à convection,
• emballage des briquettes de charbon de bois sèches dans une installation de remplissage.

5. Procédé selon la revendication 4, **caractérisé en ce que** les liants sont choisis parmi le groupe des huiles végétales de préférence recyclées ou des graisses, des amidons, des solutions de sucre et des liaisons cellulosiques et représentent un pourcentage de 0,5 à 20%, de préférence de 1 à 15% et de façon particulièrement préférée de 2 à 10% de la masse sèche des briquettes de charbon de bois.

6. Procédé selon une des revendications 4 et 5, **caractérisé en ce que** les additifs sont choisis parmi le groupe des liaisons calciques, des argiles, des gommes arabiques et des minéraux argileux et représentent un pourcentage de 0 à 10%, de préférence de 0,5 à 8% et de façon particulièrement préférée de 1 à 5% de la masse sèche des briquettes de charbon de bois.

7. Procédé de fabrication de charbon actif, **caractérisé en ce que** le charbon de bois est préparé selon un procédé selon une des revendications 1 à 3,
comprenant les étapes suivantes :
• chargement du charbon de bois dans l'unité d'activation, une homogénéisation du charbon de bois étant réalisée dans l'installation de chargement,
• activation du charbon de bois homogénéisé dans l'unité d'activation avec un agent d'activation, de préférence de la vapeur d'eau ou du dioxyde de carbone, à une température de 600 à 1100 °C, de préférence de 700 à 1000 °C et de façon particulièrement préférée de 800 à 950 °C pendant 5 à 180 minutes, de préférence pendant 10 à 120 minutes de façon particulièrement préférée pendant 15 à 90 minutes,
la quantité d'agent d'activation choisie pour 1 g de charbon de bois étant de 0,1 à 2 g, de préférence de 0,3 à 1,8 g et de façon particulièrement préférée de 0,4 à 1,6 g.
• confection du charbon de bois actif,
• emballage du charbon de bois actif confectionné dans l'installation de remplissage.

8. Procédé de fabrication de charbon industriel, en particulier d'un additif pour le béton ou d'une matière première secondaire pour l'industrie métallurgique, **caractérisé en ce que** le charbon de bois est préparé selon un procédé selon une des revendications 1 à 3, comprenant les étapes suivantes :
• chargement du charbon de bois dans l'unité de traitement,
• division du charbon de bois dans l'unité de classement, le charbon étant divisé en fonction la taille des particules en une fraction grossière, une fraction moyenne et une fraction fine, la fraction grossière comprenant une taille de particules de 0,4 à 10 mm, de préférence de 0,3 à 6 mm et de façon particulièrement préférée de 0,25 à 4 mm, la fraction moyenne comprenant une taille de particules de 100 à 400 µm, de préférence de 75 à 300 µm et de façon particulièrement préférée de 50 à 250 µm, la fraction moyenne comprenant une taille de particules de 0 à 100 µm, de préférence de 0 à 75 µm et de façon particulièrement préférée de 0 à 50 µm,
• transformation du charbon de bois divisé selon la fraction en un bloc compact ou en une matière plus fine dans l'unité de compactage ou de broyage, le charbon de bois plus fin étant à nouveau, après le processus de broyage, conduit dans l'unité de classement et divisé,
• confection du charbon de bois industriel compacté,
• emballage du charbon de bois industriel confectionné dans l'installation de remplissage.

9. Procédé selon la revendication 7 ou 8, **caractérisé en ce que**, dans la confection, à partir du charbon de bois sont fabriqués des blocs compacts et des agglomérats comme par exemple des briquettes, des pastilles et des granulés.

10. Procédé selon une des revendications 7 à 9, **caractérisé en ce que**, dans la confection, le charbon de bois est imprégné avec des matières de préférence minérales comme par exemple des sels de potassium, de sodium et de calcium.

11. Procédé selon une des revendications 4 ou 10, **caractérisé en ce que**, dans l'installation de remplissage, sont sélectionnés des emballages appartenant au groupe des papiers kraft, des cartons, des sacs en tissu et des emballages en plastique.

12. Procédé de fabrication d'une matière isolante, **caractérisé en ce que** du charbon de bois est fabriqué selon une des revendications 1 à 3 et mélangé avec une matière première de matériau isolant et traité pour obtenir une matière isolante.
